# EUROPEAN PATENT APPLICATION

(11) **EP 1 760 309 A2**
(43) Date of publication of application: **07.03.2007**
(21) Application number: 06386021.7
(22) Date of filing: 06.07.2006
(51) Int. Cl.: F03B 17/06

(54) **Water energy converter with endless chain**

(30) Priority: 02.09.2005 GR 2005100451
(71) Applicant: Tsolpakis, Fotios, 59300 Alexandria Imathias (GR)
(72) Inventor: Tsolpakis, Fotios, 59300 Alexandria Imathias (GR)

(57) **Abstract**

A mechanical system consisting of several surfaces (3a...n), which are placed in series and alongside and on which the waterpower (15) falls, which cumulatively, through belts and wheels yields a high rotational power, transformed in work.

## Description

This invention refers to the production of work that we are able to take from water of mild flow with efficient power recovery.

Till today, the production of work from water of natural mild flow is being carried out by a propeller, resulting to low yield, as in the case of watermills.

This invention contains a mechanical system that has the capacity to produce a work of high yield, using consecutive, in series, surfaces, which receiving each of them a motional energy of the running waters, and being added all together, yield a satisfactory power recovery.

The advantage of this invention is the ability to receive large power for the production of work, while, on the contrary, the way of receiving power via a propeller is of low output.

A practical application is presented by the attached designs:

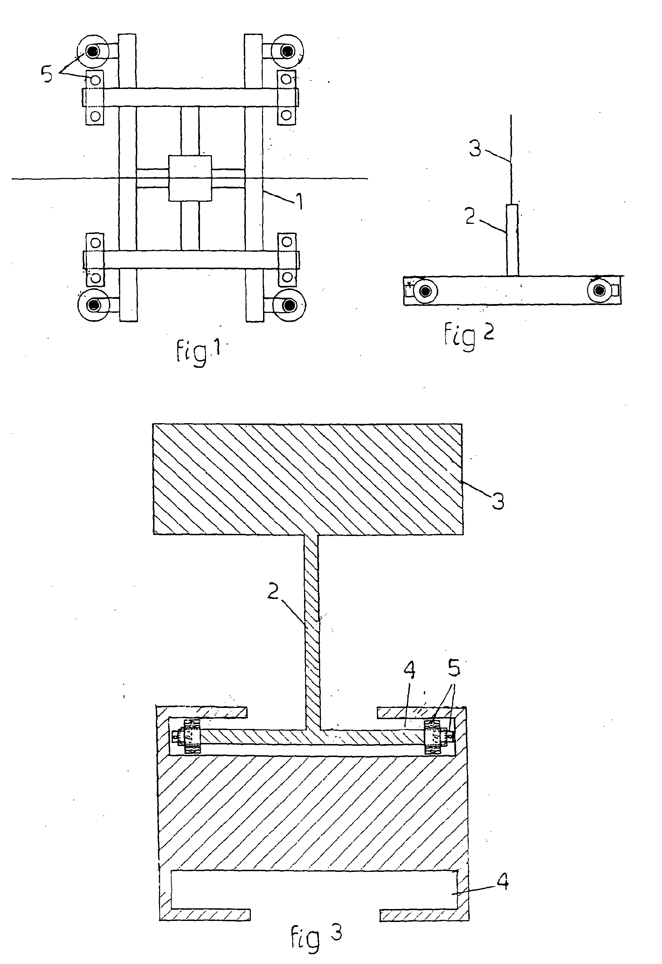

Figure 1 portrays the plan of the mechanism that received the power of water flow.
Figure 2 presents the lateral view of the mechanism.
Figure 3 presents the anterior view of the mechanism.

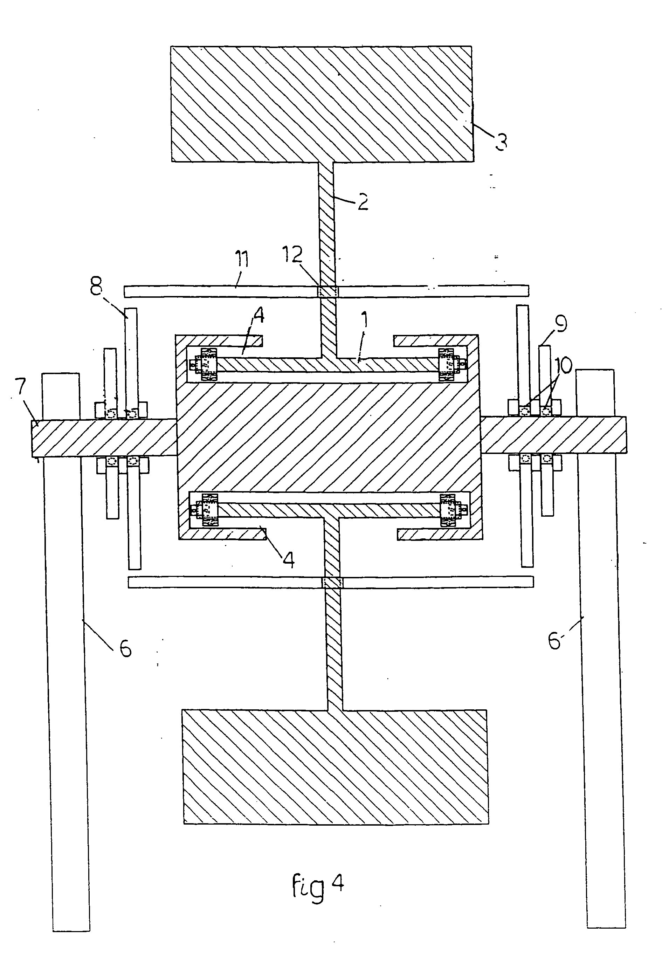

Figure 4 depicts the transmission of the motion via the lateral wheels (8) and (9) for the production of work.

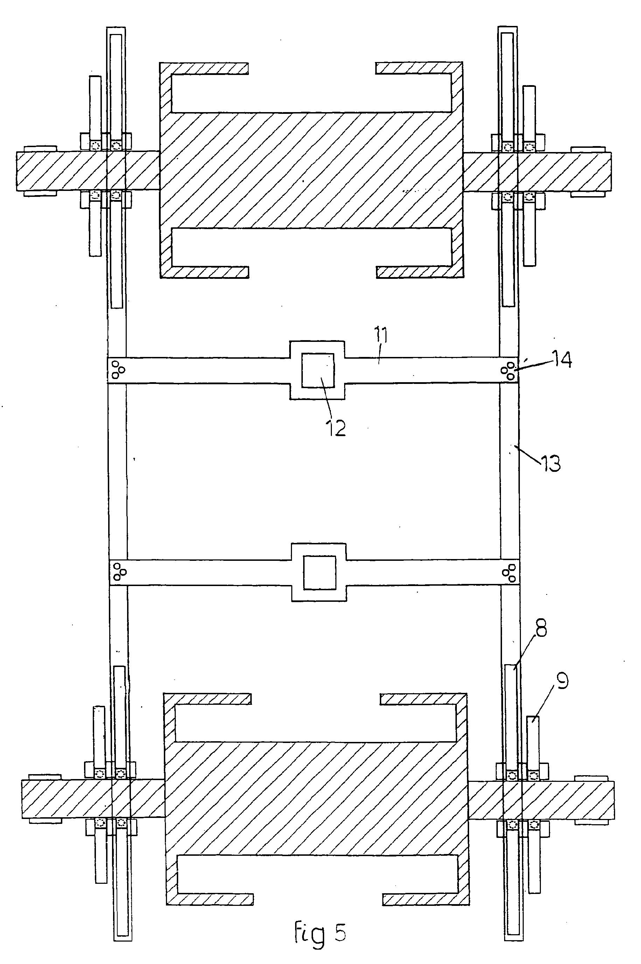

Figure 5 describes the connection of the arm (11) with the belts (13) for the motion transmission to the wheels (8) and (9).

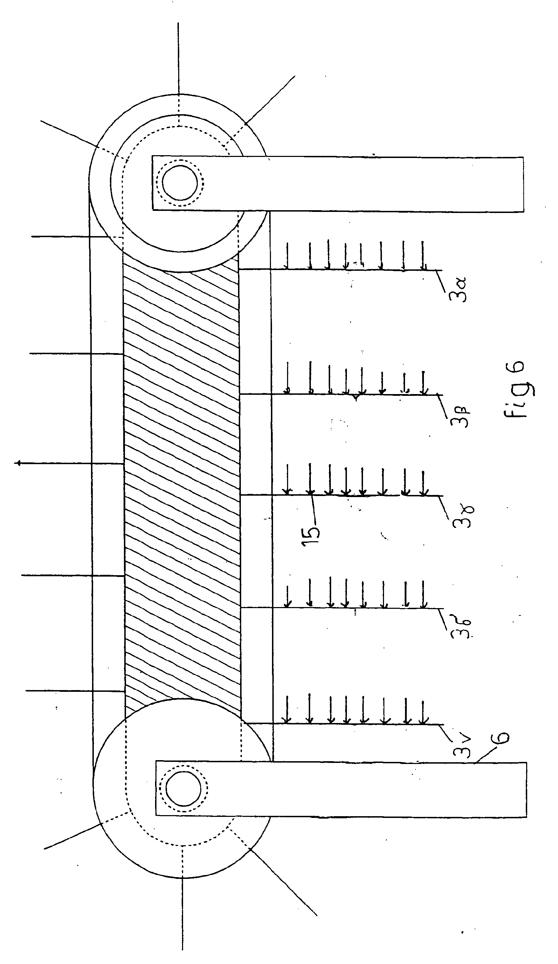

Figure 6 depicts the motion of the surfaces (3a... n), which after receiving the waterpower (15), move the wheels (8,9) through the belts.

Referring to the designs, the mechanical system of energy take-off from water of mild natural flow consists of: a base (1), an arm (2), the surfaces (3a...n), the channels (4), within which, with the help of ball bearings (5) move freely the freely parts. The whole system of receipt is controlled by the support bases (6) that retain steadily the channels (4) through the axle (7). The wheel (8) via the belt (13), which is connected with the arm (11) is rotated also simultaneously with the wheel (9), from which, through the belt or a chain, we can have a rotational motion for the production of work. The arm (2) is passed vertically through the arm (11), at point (12) moving freely. The arm (11) is connected with the belts (13), at points (14). Hence, when the surfaces (3a...n), in series, receive the waterpower (15) and move, then through the arms (2) and (11), the belts are moved (13), which afterwards move the wheel (8) and, with this and the incorporated wheel (9), produce work.

There is a possibility, instead of the wheels (8) and (9) to place gears and instead of belts (13) to place chains.

The length of the arms (2) and (11), as well as the size of the surfaces (3) depend on the required power. The surfaces (3a...n) can be metal or plastic or wooden or of any other material offered in plates.

## Claims

1. A mechanical system of energy take-off from water of mild water flow that is **characterized** from the fact that it consists of one base (1), the arm (2), the surfaces (3a... n), the channels (4), within which, with the help of ball bearings (5) move freely the previous parts. The whole take-off system is controlled by the support bases (6) that retain steadily the channels (4) via axle (7). The wheel (8) via the belt 913), which is connected with the arm (11), is also rotated simultaneously with the wheel (9) from which, through the belt of a chain, we can have a rotational move for the production of work. The arm (2) is passed vertically through the arm (2), at point (12) moving freely. The arm (11) is connected with the belts (13) at points (14).

2. A mechanical system of energy take-off from water of mild natural flow, as in (1), and is **characterized by** the fact that there is a possibility, instead of wheels (8) and (9) to place gears and instead of belts (13) to place chains. Furthermore, the length of the arms (2) and (111), as well as the size of surfaces (3) depends on the required power. Finally, the surfaces (3a... n) can be metal or plastic or wooden or of any other material offered in plates.
